# NEUE EUROPÄISCHE PATENTSCHRIFT

(11) **EP 2 444 662 B2**
(45) Veröffentlichungstag und Bekanntmachung des Hinweises auf die Entscheidung über den Einspruch: **29.11.2017**
(45) Hinweis auf die Patenterteilung: 29.10.2014
(21) Anmeldenummer: 12151703.1
(22) Anmeldetag: 06.03.2008
(51) Int. Cl.: F03D 15/00

(54) **Verbindung von Bauteilen einer Windenergieanlage**
Connection of wind turbine components
Liaison de composants d'une éolienne

(30) Priorität: 26.03.2007 DE 102007014861
(43) Veröffentlichungstag der Anmeldung: 25.04.2012
(62) Teilanmeldung aus: 08716308.5
(73) Patentinhaber: Senvion GmbH, 22297 Hamburg (DE)
(72) Erfinder: Trede, Alf, 25885 Immenstedt (DE)
(74) Vertreter: Seemann & Partner Patentanwälte mbB

(56) Entgegenhaltungen:
- EP-A- 0 961 038
- EP-A- 1 302 685
- EP-B1- 0 573 383
- WO-A2-2008//116549
- DE-A1- 3 237 096
- DE-A1- 10 119 427
- DE-A1- 10 134 809
- DE-A1- 10 231 948
- DE-A1-102005 011 023
- DE-A1-102006 009 616
- DE-U1- 8 625 580
- US-A- 2 879 092
- US-B2- 6 713 891
- FUERST A. ET AL: 'Optimierung einer Flanschkupplung mittels reibungserhöhender Folie' KONSTRUKTION- ZEITSCHRIFT FÜR PRODUKTENTWICKLUNG UND INGENIEUR-WERKSTOFFE Nr. 9, 2004,
- LEIDICH E. ET AL: 'Reibungserhöhende Oberflächenschichten für Torsionsbelastungen' SONDERDRUCK AUS ANTRIEBSTECHNIK Bd. 40, Nr. 10, 2001, Seite 57, XP53

## Beschreibung

Die Erfindung betrifft eine Verbindung von Bauteilen einer Windenergieanlage, insbesondere von Bauteilen einer Windenergieanlage mit einem Durchmesser von mehr als 0,5 m, vorzugsweise mehr als 1,0 m, weiter vorzugsweise mehr als 1,5 m, wobei zwei miteinander zu verbindende Bauteile jeweils einander zugewandte Kontaktflächen aufweisen und im verbundenen Zustand die Bauteile miteinander verspannt sind oder werden.

Darüber hinaus betrifft die Erfindung ein Verfahren zum Herstellen einer Verbindung von Bauteilen einer Windenergieanlage sowie eine Windenergieanlage.

Im Stand der Technik ist beispielsweise unter Bezeichnung "5M" eine Windenergieanlage der Patentanmelderin bekannt, die eine Nennleistung von 5 Megawatt (MW) besitzt.

Um großvolumige Bauteile einer Windenergieanlage bei der Errichtung, Wartung oder Reparatur miteinander zu verbinden, sind Flanschverbindungen bzw. Schraubverbindungen zwischen den Bauteilen vorgesehen. Derartige Bauteile, die miteinander verbunden werden, sind beispielsweise die Rotorwelle und der Getriebeeingang sowie die Rotornabe und die Rotorwelle.

Darüber hinaus werden Schraubverbindungen eingesetzt bei der Verbindung des Rohrturms mit dem Drehlager sowie des Maschinenträgers einer Windenergieanlage mit den weiteren Bestandteilen einer Windenergieanlage, insbesondere die Verbindung zum Rotorlager, der Getriebeaufhängung, dem Achszapfen und dem (Ring-) Generator.

In US-B-6 713 891 ist eine Windkraftanlage offenbart, wobei eine Aufhängung für Kabel im Innern des Rotors der Windkraftanlage für Kabel bzw. Stromkabel oder dergleichen vorgesehen ist. Hierbei verfügt die Aufhängung über einen inneren Stab und äußere Tragplatten, so dass zwischen dem inneren Stab und den Tragplatten Kabel eingeklemmt werden.

Außerdem offenbart DE-A-10 2005 011 023 eine Windenergieanlage, wobei über Schrauben eine kraftschlüssige Verbindung zwischen einem Turm, einem Azimutlager und einer Gondel der Windkraftanlage erfolgt. Hierbei sind während des Betriebs Distanzbleche montiert, so dass die Gondel frei in den Wind gedreht werden kann. Das vorgesehene Distanzblech hat ausschließlich die technische Funktion, die Distanz zwischen einem Zahnkranz und dem Drehkranz der Gondel nach einem Transport zu vergrößern.

Überdies beschreibt EP-A-1 302 685 allgemein einen Toleranzring mit einer reibungserhöhenden Beschichtung für eine kraftschlüssige Welle-Nabe-Verbindung.

Ferner offenbart EP-A-0 961 038 allgemein ein Verbindungselement zur reibungserhöhenden spielfreien reversiblen Verbindung von zu fügenden Werkstücken.

In US 2,879,092 ist eine Scheibenkupplung für Wellen mit einer Zwischenscheibe gezeigt, wobei der Werkstoff der Zwischenscheibe weicher ist als der an den Stirnflächen der Kupplungsflansche, zwischen denen die Zwischenscheiben angeordnet sind.

Außerdem offenbart DE-U-86 25 580 eine Flanschkupplung, wobei zwei Kupplungshälften mit ihren Stirnseiten einander zugewandt sind.

Ausgehend von diesem Stand der Technik besteht die Aufgabe der Erfindung darin, die Verbindung von großvolumigen Bauteilen einer Windenergieanlage zu verbessern, wobei es möglich sein soll, die Tragfähigkeit hochbelasteter Schraubverbindungen oder dergleichen zu erhöhen.

Die Aufgabe wird gelöst durch eine Verbindung von Bauteilen einer Windenergieanlage, insbesondere von Bauteilen einer Windenergieanlage mit einem Durchmesser von mehr als 0,5 m, vorzugsweise mehr als 1,0 m, weiter vorzugsweise mehr als 1,5 m, wobei miteinander zu verbindende Bauteile jeweils einander zugewandte Kontaktflächen aufweisen und im verbundenen Zustand die Bauteile miteinander verspannt sind oder werden, wobei zwischen einem ersten Bauteil der Windenergieanlage und einem zweiten Bauteil der Windenergieanlage mehrere Verbindungszwischenkörper angeordnet sind oder werden und wobei die Verbindungszwischenkörper mit Kontaktflächen ausgebildet sind, die den Kontaktflächen des ersten und des zweiten Bauteils gegenüber angeordnet sind und wobei auf einer Kontaktfläche der Verbindungszwischenkörper eine Beschichtung vorgesehen ist, wobei die wenigstens eine beschichtete Kontaktfläche des Verbindungszwischenkörpers reibwerterhöhend wirkt bei der Ausbildung der Verbindung,
wobei das erste Bauteil als Rotorwelle und das zweite Bauteil als Rotornabe oder als Getriebeeingangswelle ausgebildet sind
oder wobei das erste Bauteil als Rohrturm oder als Maschinenrahmen und das zweite Bauteil als Drehlager, das auf dem Rohrturm angeordnet ist oder wird, ausgebildet sind
und wobei dass die Verbindungszwischenkörper mit einer Beschichtung aus Hartpartikeln, versehen sind, wobei die Partikelgröße größer als 30 µm, vorzugsweise mehr als 35 µm, beträgt, wobei die Verbindungszwischenkörper plattenförmig oder klötzchenartig ausgebildet sind.

Dadurch, dass Zwischenkörper mit einer reibwerterhöhenden Beschichtung zwischen den Kontaktflächen von Bauteilen angebracht bzw. angeordnet werden, wird eine lösbare Verbindung von mechanisch hochbelasteten Komponenten bzw. Bauteilen einer Windenergieanlage erreicht. Durch entsprechende Verbindungselemente bzw. Schrauben oder dergleichen wird eine Vorspannung zwischen den beiden zu verbindenden bzw. verbundenen Bauteilen erzeugt bzw. ausgebildet, so dass eine kraftschlüssige Verbindung erreicht wird. Dabei wird zwischen den beiden Bauteilen die reibwerterhöhende Beschichtung durch die über die Verbindungselemente aufgebrachte Vorspannung mikro-plastisch verformt, wodurch höhere Reibwerte erreicht werden. Dies ist insbesondere bei der Anwendung von Windenergieanlagen bzw. Errichtung von Windenergieanlagen wichtig, da beispielsweise die Windenergieanlage unter sehr ungünstigen Montage- und Reparaturbedingungen errichtet bzw. repariert werden.

Durch die erfindungsgemäße Verbindung ist es möglich, tonnenschwere, teilweise verschmutzte oder verölte Bauteile in Höhen von bis zum 120 m auch bei ungünstigen Wetterbedingungen, wie z.B. Schnee, Eis oder Regen miteinander zu verbinden, mit einer mechanisch hochbelasteten Verbindung zwischen den Bauteilen, wobei gleichzeitig durch die Anordnung der reibwerterhöhenden Verbindungszwischenkörper zwischen den Kontaktflächen der Bauteile die Tragfähigkeit der Verbindung erhöht wird bzw. ist.

Im Rahmen der Erfindung wird unter einer Verbindung insbesondere eine Flanschverbindung von Bauteilen verstanden. Ferner wird im Rahmen der Erfindung unter einem Bauteil insbesondere eine Funktionsgruppe oder Systemgruppe bzw. eine Funktionseinheit oder Systemeinheit einer Windenergieanlage, z.B. eine Rotornabe, eine Rotorwelle, ein Getriebe, verstanden, die mit einer anderen Funktions-/Systemgruppe oder Funktions-/Systemeinheit der Anlage über die erfindungsgemäße Verbindung, insbesondere Schraubverbindung bzw. Flanschverbindung, mechanisch gekoppelt ist oder wird. Insbesondere handelt es sich bei den Bauteilen oder Funktionseinheiten oder Systemeinheiten um großvolumige Bauteile mit Gewichten von mehr als 100 kg bis hin zu mehreren Tonnen.

Darüber hinaus zeichnet sich die Verbindung dadurch aus, dass die wenigstens eine beschichtete Kontaktfläche des Verbindungszwischenkörpers oder der Verbindungszwischenkörper eine rauere Oberfläche als die der beschichteten Kontaktfläche des Verbindungszwischenkörpers bzw. der Körper gegenüberliegende Kontaktfläche des ersten und/oder des zweiten Bauteils aufweist. Aufgrund der härteren, reibwerterhöhenden Beschichtung der Verbindungszwischenkörper gegenüber den Kontaktflächen der Bauteile wird die (mikro-)plastische Verformung der weicheren Kontaktflächen bei Aufbringen einer Vorspannung durch entsprechende Verbindungselemente verbessert. Somit wird der Kraftschluss der zu verbindenden Bauteile erhöht.

Insbesondere zeichnet sich die Verbindung dadurch aus, dass die Verbindungszwischenkörper auf den Kontaktflächen, die den Kontaktflächen des ersten und des zweiten Bauteils gegenüberliegend angeordnet sind, mit jeweils einer Beschichtung versehen sind, wobei die beschichteten Kontaktflächen den Reibwert bei der Ausbildung der Verbindung erhöhen und/oder eine rauere Oberfläche als die Kontaktflächen eines oder beider Bauteile aufweisen. Hierdurch wird eine lösbare Verbindung mit hohen Reibwerten zwischen den Verbindungszwischenkörpern und den Kontaktflächen erreicht, wobei bei einer Wartung der Windenergieanlage bzw. der Bauteile der Windenergieanlage die gelöste Verbindung zwischen den Bauteilen mit den dazwischen angeordneten Verbindungszwischenkörpern bei einer Demontage anschließend beim Zusammenbau wieder eine Verbindung zwischen den Bauteilen mit einem hohen Reibschluss gewährleisten.

Darüber hinaus ist in einer weiteren Ausführungsform vorgesehen, dass durch oder bei Anordnung der Verbindungszwischenkörper zwischen dem ersten und dem zweiten Bauteil der Reibschluss zwischen dem ersten und dem zweiten Bauteil, insbesondere im Vergleich zu einer Verbindung des ersten und zweiten Bauteils ohne dazwischen angeordnete Verbindungszwischenkörper, erhöht ist oder wird.

Insbesondere zeichnet sich die Verbindung dadurch aus, dass das erste und das zweite Bauteil mittels einer Flanschverbindung oder eines Flansches miteinander verbunden sind.

Vorteilhafterweise sind oder werden durch Verbindungselemente, vorzugsweise Schrauben, Bolzen oder dergleichen, das erste und das zweite Bauteil vorgespannt, so dass eine kraftschlüssige Verbindung zwischen den zu verbindenden Bauteilen einer Windenergieanlage ausgebildet wird.

Weiterhin sind oder werden die Verbindungszwischenkörper von den Verbindungselementen durchsetzt, so dass eine passgenaue Anordnung der Verbindungszwischenkörper zwischen den Bauteilen bzw. den Kontaktflächen gewährleistet ist.

Darüber hinaus ist es von Vorteil, wenn die Beschichtung oder die Beschichtungen der Verbindungszwischenkörper Hartpartikel, insbesondere Partikel mit dem Härtegrad von Diamant oder kubischem Bor-Nitrat (CBN) oder von Korund oder Carbid, aufweisen.

Derartige Beschichtungen zeichnen sich dadurch aus, dass die als reibwerterhöhende Beschichtungen die lösbare Verbindung zwischen den Bauteilen verbessern.

In einer Alternative weist die Beschichtung Zinksilicat auf oder ist durch Spritzverzinken oder dergleichen entsprechend mit einer reibwerterhöhenden Beschichtung ausgebildet. Dadurch, dass die Verbindung spritzverzinkt ist, wird ebenfalls eine zuverlässige, reibwerterhöhende Beschichtung bereitgestellt.

Insbesondere zeichnet sich die Verbindung dadurch aus, dass die Verbindung aufgrund der erfindungsgemäßen Beschichtung einen Reibwert von mehr als 0,5, vorzugsweise mehr als 0,55, insbesondere mehr als 0,6 oder 0,7, aufweist, so dass durch die hohen Reibwerte eine kompakte Ausführung von Verbindungsflanschen an den Bauteilen möglich ist.

Dadurch, dass die Verbindungszwischenkörper plattenförmig oder klötzchenartig ausgebildet sind, ergibt sich eine einfache Handhabung der Verbindungszwischenkörper bei der Montage. Dadurch, dass kleine Segmente als Verbindungszwischenkörper beschichtet werden, ist es möglich, dass kleine Segmente preiswert beschichtbar sind bzw. beschichtet sind. Nach einer Demontage oder Reparatur der Bauteile können auch die Zwischenelemente der lösbaren Verbindung ohne großen Aufwand ausgetauscht werden, was die Handhabung der Verbindungszwischenkörper deutlich erhöht.

Weiterhin sind beispielsweise zur Ausbildung einer Flanschverbindung die Kontaktflächen des ersten und des zweiten Bauteils ringartig und/oder geschlossen ausgebildet.

Eine besondere Ausführungsform der Verbindung zeichnet sich dadurch aus, dass die Verbindungszwischenkörper bei oder durch Anordnung zwischen dem ersten und dem zweiten Bauteil eine Art segmentierten Ring, insbesondere segmentierten Kreisring, oder Teile davon bilden, so dass die Verbindungszwischenkörper beispielsweise als plattenförmige Kreisringsegmente ausgebildet sind. Hierbei sind die Verbindungszwischenkörper mit dem ersten und/oder dem zweiten Bauteil mechanisch mittels Montierelementen, insbesondere Schrauben oder Stifte oder Klammern oder dergleichen, verbunden oder werden mittels der Montierelemente damit verbunden. Mittels der Montierelemente werden die segmentierten Verbindungszwischenkörper beispielsweise mit einem Bauteil verbunden, so dass anschließend auf der anderen, freien Seite der Verbindungszwischenkörper das zweite Bauteil mit einer Kontaktfläche angeordnet wird.

Insbesondere sind das erste Bauteil als Rotorwelle und das zweite Bauteil als Rotornabe oder als Getriebeeingangswelle ausgebildet. In einer Alternative sind das erste Bauteil als Rohrturm oder als Maschinenrahmen und das zweite Bauteil als Drehlager, das auf dem Rohrturm angeordnet ist oder wird, ausgebildet.

Im Rahmen der Erfindung ist es weiter möglich, dass die erfindungsgemäße Verbindung zwischen dem Maschinenträger einer Windenergieanlage und dem Rotorlager, dem Achszapfen, dem Generator oder der Getriebeaufhängung ausgebildet ist.

Vorteilhafterweise ist die Verbindung als kraftschlüssige, insbesondere lösbare, Verbindung, insbesondere querkraftbelastete und/oder torsionsbelastete Verbindung oder Schraubverbindung, ausgebildet.

Vorzugsweise handelt es sich bei dem ersten oder zweiten oder dritten Bauteil um ein Gussbauteil, vorzugsweise mit (Anschluss-)-Durchmessern von 0,5 m bis 1 m.

Eine weitere Lösung der Aufgabe erfolgt mittels eines Verfahrens zum Herstellen einer Verbindung von Bauteilen einer Windenergieanlage, wobei eine Verbindung nach einem der voranstehenden Ausführungsbeispiele ausgebildet wird.

Darüber hinaus wird die Aufgabe gelöst durch eine Windenergieanlage, die mit einer voranstehend beschriebenen Verbindung ausgebildet ist.

Die Erfindung wird nachstehend ohne Beschränkung des allgemeinen Erfindungsgedankens anhand der Zeichnungen näher beschrieben, wobei bezüglich aller im Text nicht näher erläuterten erfindungsgemäßen Einzelheiten ausdrücklich auf die Zeichnungen verwiesen wird. Es zeigen:
- Fig. 1: im Querschnitt die Verbindung einer Rotorwelle mit einer Rotornabe und dem Getriebe im Ausschnitt;
- Fig. 2: in einer Detailansicht den Verbindungsübergang der Rotorwelle mit dem Getriebe;
- Fig. 3a: die Flanschverbindung von Rotornabe mit der Rotorwelle in einer Detailansicht;
- Fig. 3b: die Ansicht auf eine Flanschverbindung der Rotornabe mit geschnittener Rotorwelle;
- Fig. 4a-4d: jeweils Ansichten von Kreissegmentzwischenkörpern In Ansichtsdarstellung und
- Fig. 5: eine Detailansicht eines Verbindungsübergang der Rotorwelle mit dem Getriebe gemäß einer weiteren Ausführungsform.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

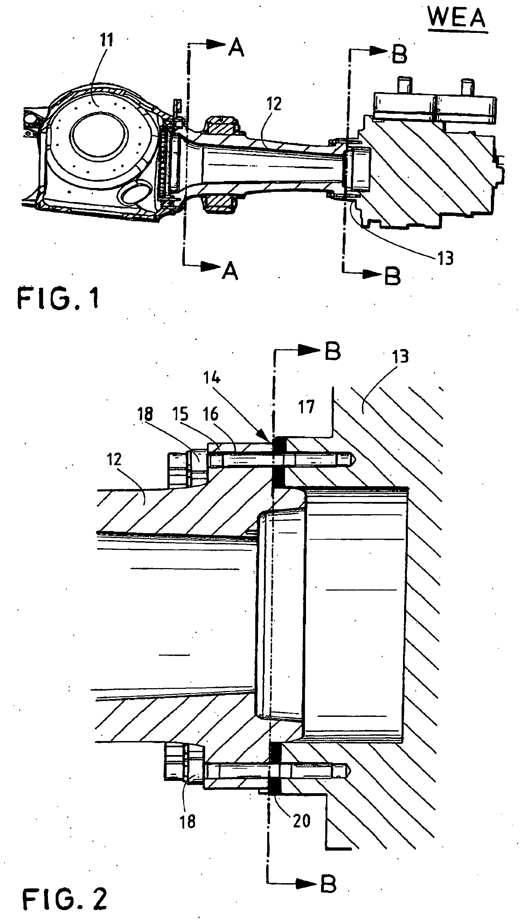

Fig. 1 zeigt im Querschnitt die verbundene Anordnung einer Rotornabe 11 mit einer Rotorwelle 12 und einem Verbindungsteil 13 eines entsprechenden Getriebes einer Windenergieanlage. Die Rotornabe 11, die Rotorwelle 12 und das im Schnittbild nicht weiter detaillierte Getriebe, welches im vorderen Bereich das Verbindungsteil 13 aufweist, sind Teile einer schematisch bezeichneten Windenergieanlage WEA.

Wie aus der Detailansicht in Fig. 2 hervorgeht, ist die Rotorwelle 12 mit dem Verbindungsteil 13 des Getriebes mittels einer Flanschverbindung 14 verbunden. Hierzu weist die Rotorwelle 12 an dem dem Verbindungsteil 13 zugewandten Ende einen Flanschring 15 auf, der über entsprechende Bohrungen 16 zur Aufnahme von Schrauben verfügt. Die Bohrungen 16 sind regelmäßig über den Umfang des Flanschringes 15 angeordnet. Das Verbindungsteil 13 des Getriebes weist auf der der Rotorwelle 12 zugewandten Seite korrespondierende Sacklochbohrungen 17 auf, die entsprechende Gewinde besitzen. Von der Rotorwellenseite werden Schrauben 18 mit Gewinde in die Bohrungen 16 der Rotorwelle 12 und die Bohrungen 17 des Verbindungsteils 13 eingebracht, so dass die Rotorwelle 12 mit dem Verbindungsteil 13 unter Ausbildung einer Vorspannung verbunden wird.

Zwischen dem Ende der Rotorwelle 12 und dem Ende des Verbindungsteils 13, das der Rotorwelle 12 gegenüber angeordnet ist, sind im Bereich der Bohrungen 16, 17 Verbindungszwischenkörper 20 angeordnet, die sich lösbar zwischen der Rotorwelle 12 und dem Verbindungsteil 13 befinden. Die Verbindungszwischenkörper 20 sind gemäß der Erfindung mit einer reibwerterhöhenden Beschichtung zu beiden Seiten der Rotorwelle 12 und des Verbindungsteils 13 versehen, so dass durch Anziehen der Schrauben 18 der Reibwert und der Reibschluss zwischen der Rotorwelle 12 und dem Verbindungsteil 13 erhöht wird bzw. ist.

Bei einer Demontage, d.h. Lösen der Verbindung zwischen der Rotorwelle 12 und dem Verbindungsteil 13 durch Herausdrehen der Schrauben 18 ist es möglich, dass die Verbindungszwischenkörper 20 an der lösbaren Verbindung zwischen den beiden Bauteilen manuell entfernt werden können. Die Kontaktflächen der Rotorwelle 12 und des Verbindungsteils 13, die einander gegenüberliegen, können sowohl beschichtet als auch unbehandelt, d.h. glatt sein. Insbesondere sind die Verbindungszwischenkörper 20 mit einer Beschichtung aus Hartpartikeln, wie z.B. Diamant versehen, wobei die Partikelgröße größer als 30 µm, vorzugsweise mehr als 35 µm beträgt. Bevorzugt sind die Verbindungszwischenkörper 20 galvanisch mit Nickelbasis diamantbeschichtet mit einer mittleren Partikelgröße von 46 µm (Diamant D46). Typischerweise sind die Enden der Rotorwelle 12 und des Verbindungsteils 13 im Durchmesser größer als 0,5 m.

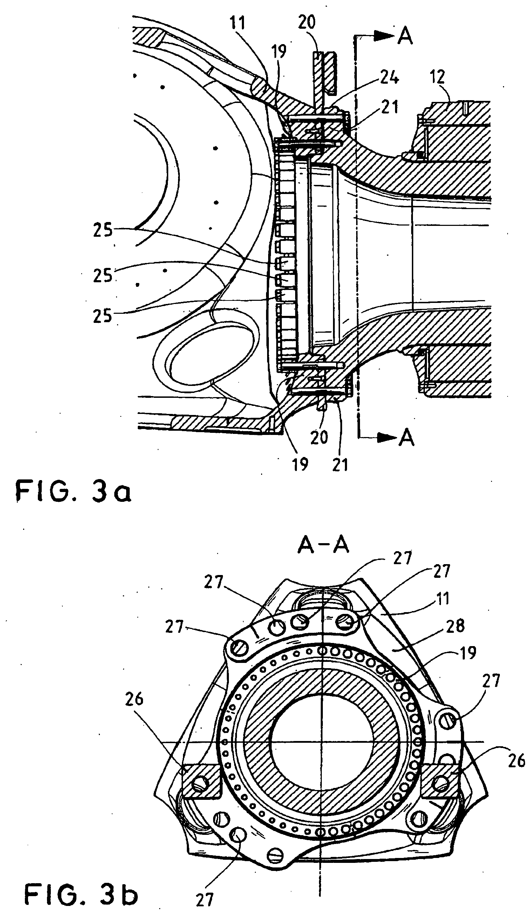

In Fig. 3a ist weiterhin eine Detailansicht der Verbindung zwischen der Rotorwelle 12 und der Rotornabe 11 (vgl. Fig. 1) im Querschnitt dargestellt. Hierzu verfügt die Rotornabe 11 an ihrer Innenseite über einen Flanschring 19 mit entsprechenden Bohrungen, in die Bolzen bzw. Schrauben eingesetzt werden und mit der Stirnseite der Rotorwelle 12 verbunden werden. Dazu sind an der Rotorwelle 12 entsprechende Sacklochbohrungen zur Aufnahme der Schrauben bzw. Bolzen vorgesehen.

Die Schrauben bzw. Bolzen werden von der Innenseite der Rotornabe 11 eingesetzt und mit der Rotorwelle 12 verbunden. Weiterhin ist zur Ausbildung einer wechselseitigen Flanschverbindung an der Rotorwelle 12 ein Flanschring 21 mit entsprechenden Bohrungen zur Aufnahme von Bolzen bzw. Schrauben vorgesehen. Hierbei werden von der der Rotornabe 11 abgewandten Seite die Bolzen in die Bohrungen des Flanschringes 21 eingesetzt, so dass die Bolzen bzw. Schrauben entsprechend ausgebildete (Sackloch- oder Durchgangs-) Bohrungen an der Rotornabe 11 durchdringen, wodurch die Bolzen der äußeren Reihe des Flanschringes 21 entgegen den Bolzen der inneren Reihe des Flanschringes 19 der Rotornabe 11 angeordnet sind. Hierbei ist der Lochkreis der Bohrungen des Flanschrings 21 größer als der Lochkreis der Bohrungen des Flanschringes 19.

Insgesamt wird dadurch eine zweireihige Schraubenflanschverbindung der beiden mechanisch hochbelasteten Bauteile ermöglicht, wobei die Montage dadurch erfolgt, dass die Rotornabe und die Rotorwelle zueinander ausgerichtet werden, anschließend die Verschraubung der Reihe von Bolzen am außen liegenden Flanschring 21 der Rotorwelle 12 erfolgt und danach die Verbindungselemente in Form von Bolzen oder Schrauben im Inneren der Rotornabe 11 am innen liegenden Flanschring 19 verschraubt werden. Anschließend werden die Bolzen bzw. Schrauben mit einer vorbestimmten Vorspannkraft verspannt. Hierdurch wird eine robuste Flanschverbindung der Rotornabe 11 mit der Rotorwelle 12 ermöglicht.

Durch Hülsen 25 unter den Schraubenköpfen der inneren Schraubenreihe ist es möglich, zwecks Standardisierung einheitliche Schraubenlängen zu verwenden. Auf dem äußeren Flanschring 21 ist eine Spur 24 angeordnet, die als Kontaktbahn für einen (nicht dargestellten) Blitzableiter fungiert.

Um eine reibwerterhöhte Verbindung zwischen der Rotornabe 11 und der Rotorwelle 12 auszubilden, ist zwischen den beiden Enden der Rotorwelle 12 und der Rotornabe 11 bzw. zwischen den Flanschringen 19 und dem Flanschring 21 eine Reihe von Verbindungszwischenkörpern 20 angeordnet, die zu beiden Kontaktflächen der Flanschringe 19, 20 beschichtete Oberflächen aufweisen, so dass der Reibschluss bei Verspannung der Bolzenreihe an den Flanschringen 19, 21 zu einem besseren Reibschluss führt.

Durch die erfindungsgemäßen Verbindungszwischenkörper 20 mit ihren reibwerterhöhenden Beschichtungen zu beiden Seiten der Bauteile, Rotornabe 11 und Rotorwelle 12, wird eine Anordnung zum Verhindern von Relativbewegungen zwischen den gegeneinander verspannten, reibschlüssig zusammenwirkenden Bauteilen (Rotornabe 11 und Rotorwelle 12) erreicht.

Insbesondere handelt es sich bei der Rotornabe 11 um ein Bauteil aus Gusswerkstoff, z.B. Kugelgraphitguss, oder aus einfachem Baustahl, wobei die Kontaktfläche des Flanschringes 20 zur Rotornabe bevorzugt mechanisch glatt, z.B. RZ 16, bearbeitet worden ist.

Darüber hinaus ist die Rotorwelle 12 als zweites Bauteil als Stahlbauteil (Baustahl oder Vergütungsstahl) oder als Gussbauteil ausgeführt. Bevorzugt kann die Kontaktfläche zur Rotornabe 11 sandgestrahlt sein, z.B. SA3, wobei die Oberfläche in weiteren Ausführungsformen auch gehärtet sein kann.

Die durch die Verbindungselemente bzw. Bolzen aufgebrachte Vorspannung zwischen der Rotorwelle 12 und der Rotornabe 11 sollte an den Kontaktflächen Flächenpressungen im Bereich von 60 bis 220 N/mm², vorzugsweise zwischen 90 und 200 N/mm², erreichen. Bei Beschichtungen mit Zink, z.B. Spritzverzinkung oder Zinksilikat sind vorzugsweise geringere Flächenpressungen bevorzugt zwischen 20 und 100 N/mm² auszubilden. Hierdurch lassen sich Reibwerte der Verbindung von der Rotorwelle mit der Rotornabe oberhalb von 0,6, vorzugsweise oberhalb von 0,7, auf sehr kostengünstige und zuverlässige Weise realisieren.

Unter guten Bedingungen sind Reibwerte oberhalb von 0,85 erreichbar, sogar nach erfolgtem Durchrutschen wird ein Reibwert von 0,65 erreicht. Dadurch ist eine kompakte Ausführung von Verbindungsflanschen möglich. Alternativ kann bei gleichen Abmessungen ein einfaches Schraubenanzugsverfahren (z.B. drehmomentgesteuert statt hydraulisch vorgespannt) genutzt werden.

In Fig. 3b ist weiterhin die Ansicht auf den Flanschring 19 der Rotornabe 11 dargestellt. Hieraus ist zu ersehen, dass die Bohrungen des Flanschringes 19 kreisförmig angeordnet sind, wobei der Anschlussbereich der Rotornabe 11 zur Rotorwelle am Flanschring 19 einen Durchmesser von mehr als 0,5 m im Allgemeinen aufweist.

Aus den Figuren 3a und 3b ist weiterhin zu ersehen, dass die Verbindungszwischenkörper 20 gleichzeitig als Arretierscheibe für eine Rotorarretierung genutzt werden. Die Arretierscheibe besteht aus drei identischen Segmenten, die als Verbindungszwischenkörper 20 ausgeführt sind. Die Arretierung erfolgt über zwei Arretiervorrichtungen 26, bei denen nicht dargestellte Bolzen durch die Bolzenaufnahmen 27 geschoben werden. Insgesamt 12 Bolzenaufnahmen 27 sind so positioniert, dass jedes Rotorblatt in vertikaler und horizontaler Position arretierbar ist.

Die drei Ausnehmungen 28 in der Arretierscheibe ermöglichen dem Wartungspersonal einen Durchstieg in die Rotornabenverkleidung. Besonders wirtschaftlich ist es, wenn die Arretierscheibe aus Reststücken der Maschinenrahmenfertigung gefertigt wird. Die Rotornabenverkleidung (nicht dargestellt) wird bevorzugt an den Zwischenelementen 20 befestigt, um nicht den Kraftfluss in der Rotornabe durch zusätzliche Befestigungen (Angüsse) zu stören.

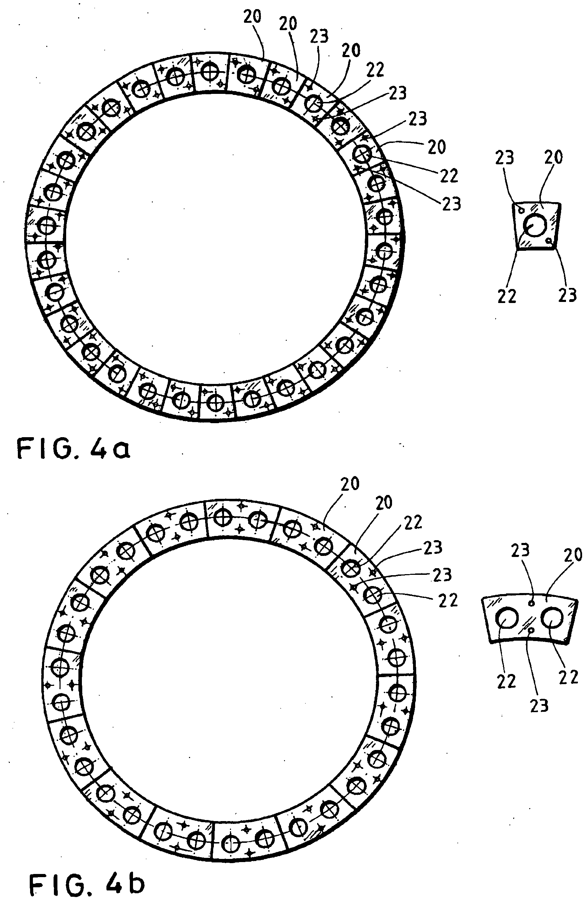

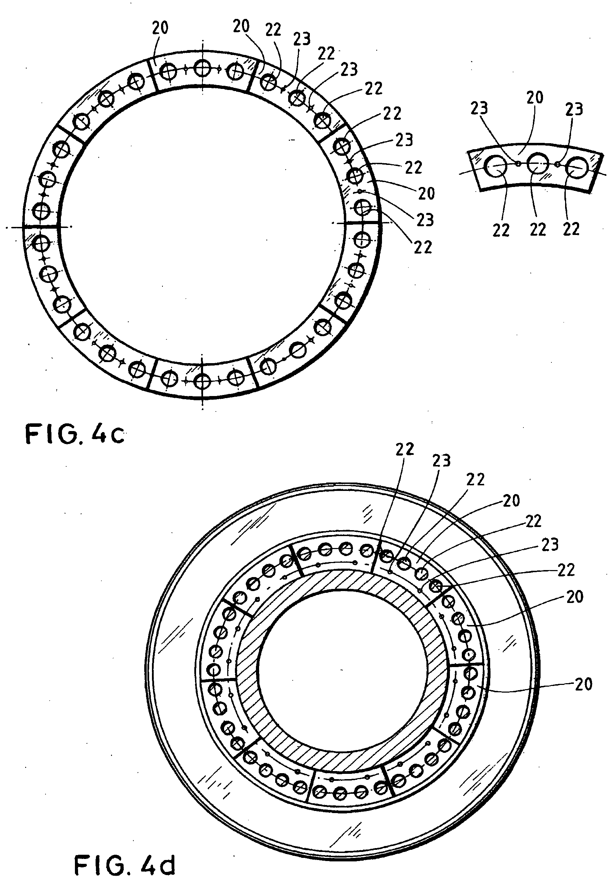

In den Figuren 4a bis 4d sind verschiedene Ausführungen der Anordnung von Verbindungszwischenkörper 20 an einem Bauteil bzw. an einem Flansch eines Bauteils in einer Ansicht dargestellt, wobei in den Figuren 4a bis 4c im linken Bereich jeweils eine kreisförmige Anordnung der Verbindungszwischenkörper 20 und im rechten Bereich der Figuren jeweils einer Einzelansicht der Verbindungszwischenkörper 20 dargestellt ist.

Die Verbindungszwischenkörper 20 sind beispielsweise etwa 5 mm stark und 200 bis 600 mm lang. Kleinere Elemente reduzieren die Beschichtungskosten, erhöhen aber den Montageaufwand, so dass im Einzelfall die genauen Abmessungen an die jeweilige bevorzugte sowie vorbestimmte Anwendung anzupassen sind.

Mittels der einseitig beschichteten, vorzugsweise beidseitig zu den Kontaktflächen von Bauteilen beschichteten, Verbindungszwischenkörper 20 zwischen den Kontaktflächen von zwei Bauteilen, insbesondere den Kontaktflächen von einer Flanschverbindung zwischen den Bauteilen, wird eine Art segmentierter Ring aus den Verbindungszwischenkörpern 20 gebildet. Die Verbindungszwischenkörper 20 sind als Teilsegment einer kreisförmigen Anordnung ausgebildet.

Die Zwischenverbindungskörper 20 können ein oder mehrere Durchgangslöcher 22 aufweisen, so dass die Verbindungszwischenkörper 20 von Bolzen oder Schrauben einer Flanschverbindung zwischen zwei zu verbindenden Bauteilen durchsetzt werden. Darüber hinaus verfügen die Verbindungszwischenkörper 20 über kleinere Bohrungen 23, so dass Montierelemente in Form von versenkten Schrauben die Bohrungen 23 durchsetzen, wodurch beispielsweise eine Montage der Verbindungszwischenkörper 20 auf einem Flanschring ermöglicht bzw. vereinfacht wird.

Hierdurch können durch Einbringen von Schrauben oder anderen Montierelementen in die Bohrungen die Verbindungszwischenkörper 20 an den Kontaktflächen der Bauteile montiert werden, wobei vorzugsweise die Kontaktflächen entsprechend Sacklochbohrungen zur Aufnahme von Gewinden aufweisen.

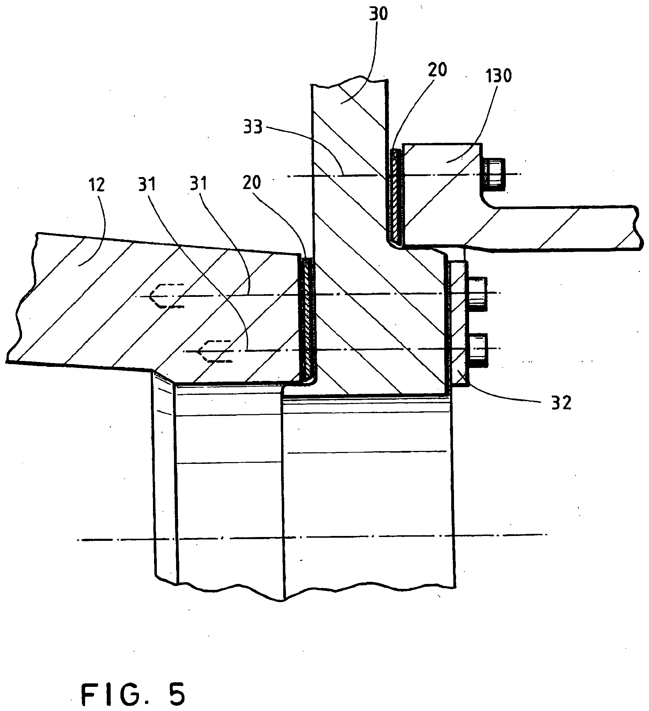

Fig. 5 zeigt ein weiteres Ausführungsbeispiel einer Verbindung von einer Rotorwelle 12 mit einem Getriebeflansch 130 eines nicht weiter dargestellten Getriebes entsprechend der in Fig. 2 gezeigten Ausführung. Hierbei ist zwischen der Rotorwelle 13 und dem Getriebeflansch 130 eine Arretierscheibe 30 angeordnet, die sowohl Kontaktflächen zu der Rotorwelle 12 und dem Getriebeflansch 130 aufweist.

Um die Verbindung zwischen der Rotorwelle 12 und der Arretierscheibe 30 bzw. zwischen der Rotorwelle 12 und dem Getriebeflansch 130 in ihrer Festigkeit zu verbessern, sind zwischen der Rotorwelle 12 und der Arretierscheibe 130 Verbindungszwischenkörper 20, die mit einer Beschichtung auf der Oberfläche versehen sind, angeordnet. Ferner ist die Arretierscheibe 30 mit Durchgangslöchern versehen, so dass schematisch eingezeichnete Schrauben 31, die an der Getriebeflanschseite eingesetzt werden, einen Unterlegring 32, die Arretierscheibe 30 und die vorgesehenen Durchgangslöcher der Verbindungszwischenkörper 20 durchsetzen und in Sacklochbohrungen der Rotorwelle 12 münden. Durch den Unterlegring 32 wird eine bessere Lastverteilung erreicht.

Weiterhin sind zwischen der Arretierscheibe 30 und dem Getriebeflansch 130 Verbindungszwischenkörper 20 angeordnet, sodass der Getriebeflansch 130 und die Arretierscheibe 30 mit schematisch eingezeichneten Schrauben 33 verbunden werden. Bei den Verbindungszwischenkörpern 20 handelt es sich um erfindungsgemäß gehärtete und/oder beschichtete Verbindungszwischenkörper 20, so dass sich verbesserte kraftschlüssige Verbindungen mit höheren Reibschlüssen ergeben.

Bei der in Fig. 5 gezeigten Ausführungsform handelt es sich um die mehrfache Kombination oder eine Hintereinanderschaltung von mehreren erfindungsgemäßen Verbindungen.

### Bezugszeichenliste

- 11: Rotornabe
- 12: Rotorwelle
- 13: Verbindungsteil (Getriebe)
- 14: Flanschverbindung
- 15: Flanschring
- 16: Bohrung
- 17: Bohrung
- 18: Schrauben
- 19: Flanschring
- 20: Verbindungszwischenkörper
- 21: Flanschring
- 22: Bohrung
- 23: Bohrung
- 24: Spur
- 25: Hülse
- 26: Arretiervorrichtung
- 27: Bolzenaufnahme
- 28: Ausnehmung
- 30: Arretierscheibe
- 31: Schrauben
- 32: Unterlegring
- 33: Schrauben
- 130: Getriebeflansch
- WEA: Windenergieanlage

## Patentansprüche

1. Verbindung von Bauteilen (11, 12, 13) einer Windenergieanlage (WEA), insbesondere von Bauteilen (11, 12, 13) einer Windenergieanlage (WEA) mit einem Durchmesser von mehr als 0,5 m, vorzugsweise mehr als 1,0 m, weiter vorzugsweise mehr als 1,5 m, wobei zwei miteinander zu verbindende Bauteile (11, 12, 13) jeweils einander zugewandte Kontaktflächen aufweisen und im verbundenen Zustand die Bauteile (11, 12, 13) miteinander verspannt sind oder werden, wobei zwischen einem ersten Bauteil (11; 12) der Windenergieanlage (WEA) und einem zweiten Bauteil (12; 13) der Windenergieanlage (WEA) mehrere Verbindungszwischenkörper (20) angeordnet sind und wobei die Verbindungszwischenkörper (20) mit Kontaktflächen ausgebildet sind, die den Kontaktflächen des ersten und des zweiten Bauteils (11, 12, 13) gegenüber angeordnet sind und wobei auf wenigstens einer Kontaktfläche der Verbindungszwischenkörper (20) eine Beschichtung vorgesehen ist, wobei die wenigstens eine beschichtete Kontaktfläche des Verbindungszwischenkörpers (20) reibwerterhöhend wirkt bei der Ausbildung der Verbindung,
wobei das erste Bauteil (12) als Rotorwelle und das zweite Bauteil (11, 13) als Rotornabe (11) oder als Getriebeeingangswelle (13) ausgebildet sind
oder wobei das erste Bauteil (11) als Rohrturm oder als Maschinenrahmen und das zweite Bauteil (12) als Drehlager, das auf dem Rohrturm angeordnet ist oder wird, ausgebildet sind
und wobei die Verbindungszwischenkörper (20) mit einer Beschichtung aus Hartpartikeln, versehen sind, wobei die Partikelgröße größer als 30 µm, vorzugsweise mehr als 35 µm, beträgt, wobei die Verbindungszwischenkörper (20) plattenförmig oder klötzchenartig ausgebildet sind.

2. Verbindung nach Anspruch 1, **dadurch gekennzeichnet, dass** die wenigstens eine beschichtete Kontaktfläche der Verbindungszwischenkörper (20) eine rauere Oberfläche als die der beschichteten Kontaktfläche der Verbindungszwischenkörper (20) gegenüberliegende Kontaktfläche des ersten und/oder des zweiten Bauteils (11, 12, 13) aufweist.

3. Verbindung nach Anspruch 1 oder 2, **dadurch gekennzeichnet, dass** die Verbindungszwischenkörper (20) auf den Kontaktflächen, die den Kontaktflächen des ersten und des zweiten Bauteils (11, 12, 13) gegenüberliegend angeordnet sind, mit jeweils einer Beschichtung versehen sind, wobei die beschichteten Kontaktflächen den Reibwert bei der Ausbildung der Verbindung erhöhen und/oder eine rauere Oberfläche als die Kontaktflächen eines oder beider Bauteile (11, 12, 13) aufweisen.

4. Verbindung nach einem der Ansprüche 1 bis 3, **dadurch gekennzeichnet, dass** das erste und das zweite Bauteil (11, 12, 13) mittels einer Flanschverbindung oder eines Flansches (14, 19, 21) miteinander verbunden sind.

5. Verbindung nach einem der Ansprüche 1 bis 4, **dadurch gekennzeichnet, dass** durch Verbindungselemente (18), vorzugsweise Schrauben, das erste und das zweite Bauteil (11, 12, 13) vorgespannt sind oder werden, wobei insbesondere die Verbindungszwischenkörper (20) von den Verbindungselementen (18) durchsetzt sind oder werden.

6. Verbindung nach einem der Ansprüche 1 bis 5, **dadurch gekennzeichnet, dass** die Beschichtung oder die Beschichtungen der Verbindungszwischenkörper (20) Hartpartikel mit dem Härtegrad von Diamant oder kubischem Bor-Nitrid (CBN) oder von Korund oder Carbid aufweisen.

7. Verbindung nach einem der Ansprüche 1 bis 6 **dadurch gekennzeichnet, dass** die Verbindung einen Reibwert von mehr als 0,5, vorzugsweise mehr als 0,55, insbesondere mehr als 0,6 oder 0,7, aufweist.

8. Verbindung nach einem der Ansprüche 1 bis 7, **dadurch gekennzeichnet, dass** die Kontaktflächen des ersten und des zweiten Bauteils (11, 12, 13) ringartig und/oder geschlossen ausgebildet sind.

9. Verbindung nach einem der Ansprüche 1 bis 8, **dadurch gekennzeichnet, dass** die Verbindungszwischenkörper (20) bei oder durch Anordnung zwischen dem ersten und dem zweiten Bauteil (11, 12, 13) eine Art segmentierten Ring, insbesondere segmentierten Kreisring, oder Teile davon bilden und/oder dass die Verbindungszwischenkörper (20) mit dem ersten und/oder dem zweiten Bauteil (11, 12, 13) mechanisch mittels Montierelementen, insbesondere Schrauben oder Stifte oder Klammern oder dergleichen, verbunden sind oder werden.

10. Verbindung nach einem der Ansprüche 1 bis 9, **dadurch gekennzeichnet, dass** es sich bei dem ersten oder zweiten Bauteil um ein Gussbauteil handelt.

11. Verbindung nach einem der Ansprüche 1 bis 10, **dadurch gekennzeichnet, dass** die Verbindung als kraftschlüssige, insbesondere lösbare, Verbindung, insbesondere querkraftbelastete und/oder torsionsbelastete Verbindung oder Schraubverbindung, ausgebildet ist.

12. Windenergieanlage (WEA) mit einer Verbindung nach einem der Ansprüche 1 bis 11.

13. Verfahren zum Herstellen einer Verbindung von Bauteilen (11, 12, 13) einer Windenergieanlage (WEA), wobei eine Verbindung nach einem der Ansprüche 1 bis 11 ausgebildet wird.

## Claims

1. A connection of components (11, 12, 13) of a wind turbine (WEA), particularly of components (11, 12, 13) of a wind turbine (WEA) with a diameter of more than 0.5m, preferably more than 1.0m, more preferably more than 1.5m, wherein two components (11, 12, 13) to be connected together have contact surfaces directed towards one another and in the connected state the components (11, 12, 13) are clamped together, wherein a plurality of intermediate connecting bodies (20) are arranged between a first component (11, 12) of the wind turbine (WEA) and a second component (12, 13) of the wind turbine (WEA) and that the intermediate connecting bodies (20) are formed with contact surfaces, which are arranged opposed to the contact surfaces of the first and second components (11, 12, 13) and that a coating is provided on at least one contact surface of the intermediate connecting bodies (20), wherein the at least one coated contact surface of the intermediate connecting body (20) acts to increase the coefficient of friction when the connection is formed,
wherein the first component (12) is constructed in the form of a rotor shaft and the second component (11, 13) is constructed in the form of a rotor hub (11) or in the form of a transmission input shaft (13)
or wherein the first component (11) is constructed in the form of a tubular tower or in the form of a machine frame and the second component (12) is constructed in the form of a rotary bearing, which is arranged on the tubular tower.
and that the intermediate connecting bodies (20) are provided with a coating of hard particles, wherein the particle size is greater than 30µm, preferably more than 35µm, wherein the intermediate connecting bodies (20) are of plate-shaped or of block-like construction.

2. A connection as claimed in Claim 1, **characterised in that** the at least one coated contact surface of the intermediate connecting bodies (20) has a rougher surface than the contact surface, which is opposed to the coated contact surface of the intermediate connecting bodies (20), of the first and/or the second component (11, 12, 13).

3. A connection as claimed in Claim 1 or 2, **characterised in that** the intermediate connecting bodies (20) are provided with respective coatings on the contact surfaces, which are arranged opposed to the contact surfaces of the first and the second components (11, 12, 13), wherein the coated contact surfaces increase the coefficient of friction when the connection is formed and/or have a rougher surface than the contact surfaces of one or both components (11, 12, 13).

4. A connection as claimed in one of Claims 1 to 3, **characterised in that** the first and second components (11, 12, 13) are connected together by means of a flange connection or a flange (14, 19, 21).

5. A connection as claimed in one of Claims 1 to 4, **characterised in that** the first and second components (11, 12, 13) are pre-stressed by connecting elements (18), preferably screws, wherein, in particular, the connecting elements (18) pass through the intermediate connecting bodies (20).

6. A connection as claimed in one of Claims 1 to 5, **characterised in that** the coating or coatings of the intermediate connecting bodies (20) include hard particles with the hardness of diamond or cubic boron nitride (CBN) or of corundum or carbide.

7. A connection as claimed in one of Claims 1 to 6, **characterised in that** the connection has a coefficient of friction of more than 0.5, preferably more than 0.55, particularly more than 0.6 or 0.7.

8. A connection as claimed in one of Claims 1 to 7, **characterised in that** the contact surfaces of the first and the second components (11, 12, 13) are of annular and/or closed construction.

9. A connection as claimed in one of Claims 1 to 8, **characterised in that** on or as a result of their arrangement between the first and second components (11, 12, 13) the intermediate connecting bodies (20) constitute a type of segmented ring, particularly a segmented circular ring, or parts thereof and/or that the intermediate connecting bodies (20) are mechanically connected to the first and/or second component (11, 12, 13) by means of mounting elements, particularly screws or pegs or clips or the like.

10. A connection as claimed in one of Claims 1 to 9, **characterised in that** the first or second component is a cast component.

11. A connection as claimed in one of Claims 1 to 10, **characterised in that** the connection is constructed in the form of a friction-locked, particularly releasable, connection, particularly a transversely loaded and/or torsionally loaded connection or screw connection.

12. A wind turbine (WEA) with a connection as claimed in one of Claims 1 to 11.

13. A method of producing a connection of components (11, 12, 13) of a wind turbine (WEA), wherein a connection as claimed in one of Claims 1 to 11 is formed.

## Revendications

1. Liaison de composants (11, 12, 13) d'une éolienne (WEA), en particulier de composants (11, 12, 13) d'une éolienne (WEA) ayant un diamètre de plus de 0,5 m, de préférence de plus de 1,0 m, de manière encore plus préférentielle ayant un diamètre de plus de 1,5 m, dans laquelle deux composants à raccorder (11, 12, 13) comprennent chacun des surfaces de contact en regard l'une de l'autre, les composants (11, 12, 13) étant serrés ensembles lorsqu'ils sont raccordés, une pluralité d'élément intermédiaire de liaison (20) étant disposés entre un premier composant (11, 12) de l'éolienne (WEA) et un second composant (12, 13) de l'éolienne (WEA), les éléments intermédiaires de liaison (20) comprenant des surfaces de contact disposées en regard des surfaces de contact du premier et du deuxième composant (11, 12, 13), au moins une des surfaces de contact des éléments intermédiaires de liaison (20) étant pourvue d'un revêtement, ladite au moins une surface de contact revêtue des éléments intermédiaires de liaison (20) agissant en friction et participant à la formation de la liaison,
dans laquelle, le premier composant (12) et le deuxième composant (11, 13) de l'arbre de rotor constituent le moyeu de rotor (11) ou l'arbre d'entrée de transmission (13)
ou dans laquelle, le premier composant (11) constitue une tour tubulaire, ou un châssis de machine, et le deuxième composant (12) constitue un palier pivotant qui est disposé sur la tour tubulaire
les éléments intermédiaires de liaison (20) étant pourvus d'un revêtement de particules dures, la taille des particules étant supérieure à 30 microns, de préférence supérieure à 35 microns, en ce que les éléments intermédiaires de liaison (20) sont en forme de plaque ou de bloc.

2. Liaison selon la revendication 1, **caractérisée en ce qu'**au moins une surface revêtue des éléments intermédiaires de liaison (20) a une surface plus rugueuse que celle de la surface de revêtement des éléments intermédiaires de liaison (20) opposée à la surface du premier et / ou du deuxième composant (11, 12, 13).

3. Liaison selon la revendication 1 ou la revendication 2, **caractérisée en ce que** les surfaces de contact des éléments intermédiaires de liaison (20) et les surfaces de contact du premier composant et du deuxième composant (11, 12, 13) sont disposées en regard les unes des autres, chacune des surfaces étant pourvues d'un revêtement, les surfaces de contact revêtues augmentant le coefficient de friction et participant à la formation de la liaison et / ou **en ce qu'**une surface est plus rugueuse que les surfaces de contact d'un des composants ou des deux composants (11,12, 13).

4. Liaison selon l'une quelconque des revendications 1 à 3, **caractérisée en ce que** le premier composant et le deuxième composant (11, 12, 13) sont interconnectés au moyen d'une bride de fixation ou d'un rebord (14, 19, 21).

5. Liaison selon l'une quelconque des revendications 1 à 4, **caractérisée en ce qu'**au moyen d'éléments de liaison (18), de préférence des vis, le premier composant et le deuxième composant (11, 12, 13) sont contraints, en particulier, les éléments intermédiaires de liaison (20) sont traversés par les éléments de liaison (18).

6. Liaison selon l'une quelconque des revendications 1 à 5, **caractérisée en ce que** le revêtement ou les revêtements de l'élément de liaison intermédiaire (20) comprend des particules dures, des particules ayant le degré de dureté du diamant, du nitrure de bore cubique (CBN), du corindon ou du carbure.

7. Liaison selon l'une quelconque des revendications 1 à 6, **caractérisée en ce que** la liaison a un coefficient de friction supérieur à 0,5, de préférence supérieur à 0,55, en particulier supérieure à 0,6 ou 0,7.

8. Liaison selon l'une quelconque des revendications 1 à 7, **caractérisée en ce que** les surfaces de contact du premier composant et du deuxième composant (11, 12, 13) sont formées comme un anneau et / ou sont conçues pour être fermées.

9. Liaison selon l'une quelconque des revendications 1 à 8, **caractérisée en ce que** les éléments intermédiaires de liaison (20) forment, avec ou par l'agencement entre le premier composant et le deuxième composant (11, 12, 13), une sorte de bague segmentée, en particulier un anneau circulaire segmenté, ou **en ce que** des parties de ceux-ci sont formées et / ou **en ce que** les éléments intermédiaires de liaison (20) sont reliés au premier et / ou au deuxième composant (11, 12, 13) de manière mécanique au moyen d'éléments de fixation similaires, en particulier des boulons ou des goupilles ou des clips.

10. Liaison selon l'une quelconque des revendications 1 à 9, **caractérisée en ce que** le premier composant ou le deuxième composant est une pièce moulée.

11. Liaison selon l'une quelconque des revendications 1 à 10, **caractérisée en ce que** la liaison est une fixation par adhérence, en particulier une liaison amovible, en particulier formée par des efforts transversaux et / ou de torsion ou impliquant une liaison vissée.

12. Éolienne (WEA), comprenant une liaison selon l'une quelconque des revendications 1 à 11.

13. Procédé de fabrication d'une liaison de composants (11,12, 13) d'une éolienne (WEA), dans lequel une liaison selon l'une quelconque des revendications 1 à 11 est formée.
